# EUROPÄISCHE PATENTSCHRIFT

(11) **EP 0 499 058 B1**
(45) Veröffentlichungstag und Bekanntmachung des Hinweises auf die Patenterteilung: **09.08.1995**
(21) Anmeldenummer: 92100978.3
(22) Anmeldetag: 22.01.1992
(51) Int. Cl.: A47J 45/06, A47J 27/212

(54) **Deckel mit einem Ventilknopf für ein Kochgeschirr**
Cover for cookware having a grip with valve
Couvercle d'ustensile de cuisson à poignée avec soupape

(30) Priorität: 14.02.1991 DE 9101708 U
(43) Veröffentlichungstag der Anmeldung: 19.08.1992
(73) Patentinhaber: Heinrich Baumgarten KG Spezialfabrik für Beschlagteile, D-57277 Neunkirchen (DE)
(72) Erfinder: Baumgarten, Gerd-Diethard, W-5901 Wilnsdorf-Wilden (DE)
(74) Vertreter: Missling, Arne, Dipl.-Ing.

(56) Entgegenhaltungen:
- EP-A- 0 111 292
- EP-A- 0 131 459
- DE-B- 2 822 490
- DE-U- 8 512 063
- GB-A- 262 260
- US-A- 4 548 156

## Beschreibung

Die Erfindung bezieht sich auf einen Deckel für ein Kochgeschirr mit einer Ausnehmung im Deckel und einem Ventilknopf.

Bei Deckein von Kochgeschirren, beispielsweise von Kochtöpfen, Bratpfannen oder ähnlichem ergibt sich die Notwendigkeit, in Abhängigkeit von dem Kochvorgang den Innenraum des Kochgeschirres mittels des Deckels zur Umgebung hin fest zu verschließen oder diesen Innenraum mit der Umgebung in Verbindung zu bringen. Dies ist abhängig von dem jeweiligen Kochvorgang, wobei es wünschenswert sein kann, einfach und schnell zwischen einer Verschließstellung und einer Entlüftungsstellung umzuschalten.

Bei bestimmten Betriebsbedingungen kann es auch wünschenswert sein, an dem Deckel des Kochgeschirres eine Pfeife zu installieren, um ein Kochen oder Sieden des Inhaltes des Kochgeschirres akkustisch anzuzeigen. Ein hierfür geeigneter Ventilknopf ist aus der DE-AS 28 22 490 vorbekannt. Bei diesem Ventilknopf ist ein manuell verschiebbarer Schieber vorgesehen, welcher eine Inbetriebnahme bzw. Außerbetriebnahme der Pfeife ermöglicht. Ein großvolumiges Entlüften des Innenraumes des Kochgeschirres ohne Pfeifton ist nicht möglich.

Aus der DE-Gebrauchsmusterschrift 85 12 063 U1 und der US-Patentschrift 4,548,146 sind jeweils bereits Deckel der eingangs bezeichneten Art bekannt, die zweigeteilt aus einem Griffstück für den Deckel und einem zu dem Griffstück konzentrischen Betätigungsstück bestehen, das in mehrere Betriebsstellungen verdrehbar ist. Eine derartige Anordnung ist in der Herstellung und Montage relativ aufwendig; sie ist auch nicht anwenderfreundlich, da zwei Betätigungen bedient werden müssen.

Der Erfindung liegt die Aufgabe zugrunde, einen Deckel der eingangs genannten Art zu schaffen, welcher bei einfacher Ausgestaltung und betriebssicherer Handhabbarkeit eine Verschließstellung, eine Ausblasstellung und eine Pfeifstellung ermöglicht.

Erfindungsgemäß wird die Aufgabe mit den Merkmalen des Anspruches 1 gelöst.

Der erfindungsgemäße Deckel zeichnet sich durch eine Reihe erheblicher Vorteile aus. Da der erfindungsgemäße Ventilknopf selbst drehbar an dem Deckel gelagert ist, ist es auf einfachste Weise möglich, die jeweilige Betriebsstellung zu wählen, nämlich eine Verschließstellung, eine Pfeifstellung und eine Ausblasstellung. Durch das Drehen des Ventilknopfes werden auch bei heißem Kochgeschirr Verletzungen der Bedienungsperson verhindert, da diese nicht direkt mit Bauteilen in Berührung kommt, welche dem Dampf- oder Gasstrom ausgesetzt sind. Weiterhin gewährleistet die Vorspannung des Ventilknopfes in Richtung auf den Deckel einen paßgenauen Sitz, welcher ein unbeabsichtigtes Austreten von Dampf in der Trennebene zwischen dem Ventilknopf und dem Deckel verhindert.

In einer besonders günstigen Ausgestaltung der Erfindung ist vorgesehen, daß der Ventilknopf und der Deckel jeweils mit den Ventilknopf in einer Ausblasstellung, einer Pfeifstellung oder einer Verschließstellung fixierenden, lösbaren Verrastungselementen versehen sind. Die Verrastungselemente stellen sicher, daß sich der Ventilknopf in einer der drei gewünschten Stellungen befindet, eine Fehlbedienung ist ausgeschlossen. Hierdurch erhöht sich beträchtlich die Betriebssicherheit, da unbeabsichtigte Betriebsstellungen vermieden werden können und stets eine eindeutige Zuordnung des Ventilknopfes gewährleistet ist.

Die Verrastungselemente sind bevorzugterweise in Form einer dem Deckel zugewandten Erhebung der Unterseite des Ventilknopfes und einer hierzu passenden Einbuchtung des Deckels ausgebildet. Diese Ausgestaltungsform hat den Vorteil, daß der Ventilknopf in jeder der gewünschten Funktionsstellung gegen den Deckel fixiert ist und fest gegen den Deckel anliegt, da er durch das Vorspannelement gegen den Deckel vorgespannt ist. Bei einer Änderung der Funktionsstellung muß der Knopf, entweder durch direktes Anheben mit der Hand oder durch ein Verdrehen unter Anhebung durch das Verrastungselement von dem Deckel gelöst werden, um das Verrastungselement außer Eingriff zu bringen. Das hierbei erfolgende Anheben des Ventilknopfes ermöglicht es, diesen zu verdrehen, ohne daß an dem Ventilknopf vorgesehene Dichtungen oder Dichtflächen beschädigt werden. Als besonders günstig erweist sich dabei die beschriebene Gestaltung der Verrastungselemente, da bei einem Verdrehen des Ventilknopfes die Erhebung automatisch aus der Einbuchtung des Deckels herausbewegt wird und der Ventilknopf somit auf den Erhebungen gleitet.

Bevorzugterweise ist der Ventilknopf im Bereich der Ausblasöffnung, der Pfeiföffnung und dem Verschlußbereich mit einer Dichtung versehen. Mit Hilfe der Dichtungen wird verhindert, daß Dampf oder Gase aus dem Trennbereich zwischen dem Ventilknopf und dem Deckel austreten. Auf die Dichtung im Bereich der Ausblasöffnung kann auch verzichtet werden, dies ist nur hinsichtlich der Symmetrie des Ventilknopfes günstig.

Die Art der Befestigung weist den Vorteil auf, daß keine dem Benutzer zugänglichen oder sichtbaren Befestigungsteile vorgesehen sind, welche stets zu einer Demontage des Ventilknopfes zum Zwecke der Reinigung reizen. Die Halteplatte, welche am oberen Ende der Hülse befestigt ist, dient als Widerlager für das Vorspannelement und bildet einen sichtbaren, zentrischen Bereich des Ventilknopfes.

In günstiger Weise kann die Halteplatte zumindest eine dem Ventilknopf zugewandte Rastklinke aufweisen, welche bei einem Anheben des Ventilknopfes mit zumindest einer Rastausnehmung des Ventilknopfes in Eingriff bringbar ist. Die Montage des Ventilknopfes ist somit dadurch möglich, daß dieser in einem angehobenen, gegen die Wirkung des Vorspannelementes gedrückten Zustand, in welchem die Hülse drehfest mit dem Ventilknopf verbunden ist, auf den Gewindebolzen des Deckels aufgeschraubt wird. Eine Demontage erfolgt in analoger Weise.

Die Rastausnehmung und die Rastklinke weisen in günstiger Weise einen Abstand auf, welcher größer ist als das Maß, um welches der Ventilknopf bei einer Änderung der Funktionsweise durch die Verrastungselemente angehoben wird.

Der erfindungsgemäße Ventilknopf kann aus einem Kunststoffmaterial gefertigt sein, es ist auch möglich, diesen aus einem Metall herzustellen.

Im Folgenden wird die Erfindung an Hand eines Auführungsbeispieles in Verbindung mit der Zeichnung beschrieben. Dabei zeigt:
Fig. 1 eine Schnittansicht des erfindungsgemäßen Ventilknopfes und
Fig. 2 eine Draufsicht auf den in Figur 1 gezeigten Ventilknopf.

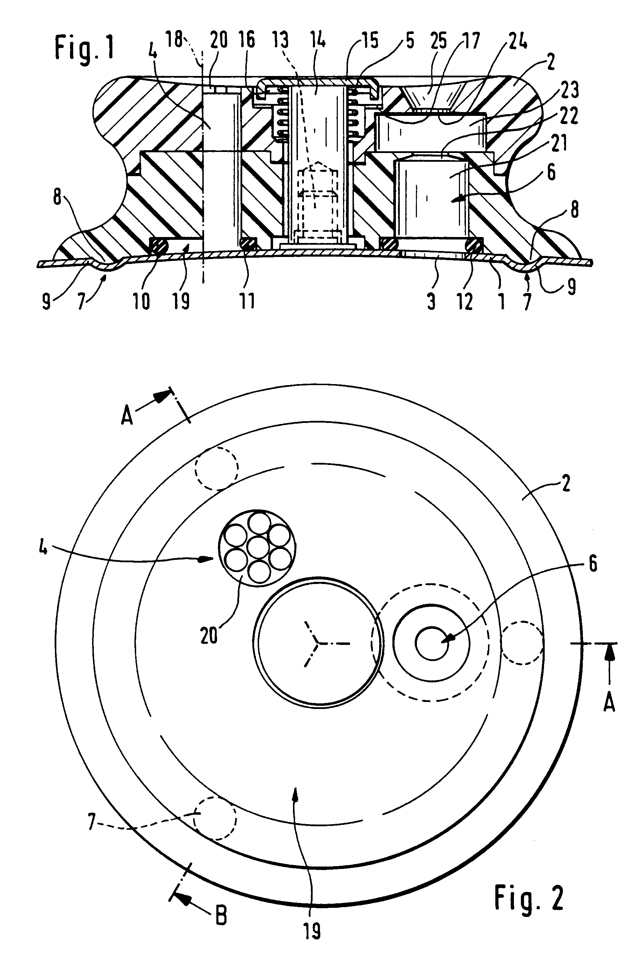

Die in Figur 2 dargestellte Draufsicht des Ventilknopfes beschreibt verschiedene Schnittlinien, welche in Figur 1 in Kombination dargestellt sind. Die rechte Bildhälfte der Figur 1 entspricht der Schnittansicht A-A, diese Schnittansicht setzt sich bis zu der in Figur 1 eingezeichneten Linie 18 fort. Links dieser Linie ist in Figur 1 der entsprechende Teil des Schnittes A-B gemäß Figur 2 dargestellt.

Die Figur 1 zeigt einen Teilschnitt eines üblichen Deckels 1 eines Kochgeschirres. An diesem ist ein Gewindebolzen 13 befestigt, beispielsweise aufgeschraubt, welcher in ein Innengewinde einer Zylinderhülse 14 eingeschraubt ist. Am oberen Ende trägt die Zylinderhülse 14 eine Halteplatte 15, welche ein Widerlager bildet, gegen das sich ein Vorspannelement 5 (Feder) abstützt, welches wiederum einen Ventilknopf 2 gegen die Oberseite des Deckels 1 drückt. Der Ventilknopf 2 ist mit einer Ausnehmung versehen, in welcher sich die Zylinderhülse 14 befindet, sodaß der Ventilknopf 2 relativ zu dem Deckel 1 frei drehbar ist.

Die Halteplatte 15 weist bei dem Ausführungsbeispiel mehrere dem Deckel 1 zugewandte Rastklinken 16 auf, welche in Rastausnehmungen 17 an der Oberseite des Ventilknopfes 2 eingreifen können, wenn der Ventilknopf 2 ausreichend weit gegen die Vorspannkraft der Feder 5 von dem Deckel 1 abgehoben ist.

Wie aus Figur 2 ersichtlich, sind an dem Ventilknopf 2 insgesamt drei verschiedene Funktionsbereiche ausgebildet, nämlich zum einen eine Ausblasöffnung 4, zum anderen eine Pfeiföffnung 6 sowie ein symmetrisch hierzu angeordneter Verschlußbereich 19. Der Deckel 1 weist eine Ausnehmung 3 auf (Figur 1), welche wahlweise durch Drehen des Ventilknopfes 2 einem der oben beschriebenen Funktionsbereiche zugeordnet werden kann.

Die Ausblasöffnung 4 ist mit einem gleichbleibenden Querschnitt versehen und an ihrem oberen Ende durch ein Gitter 20 abgedeckt. Die Pfeiföffnung 6 ist in üblicher Weise ausgebildet und umfaßt einen zylindrischen Bereich 21, welcher über eine Düse 22 in eine Kammer 23 übergeht. An deren anderem Ende ist eine weitere Düse 24 vorgesehen, welche in einen Auslaßtrichter 25 mündet. Die Pfeiföffnung 6 ist somit in üblicher Weise, wie aus dem Stand der Technik bekannt, ausgebildet.

Der Verschlußbereich 19 ist, wie auf der linken Bildhälfte von Figur 1 dargestellt, als Sackloch ausgebildet. Um eine sichere Abdichtung der einzelnen Funktionsbereiche zu gewährleisten, sind jeweils O-Ringe 10, 11 und 12 vorgesehen. Auf diese kann auch verzichtet werden, wenn der Ventilknopf paßgenau an die Deckelform angepaßt ist. Weiterhin kann auf den O-Ring 10 des Verschlußbereiches 19 verzichtet werden.

Um eine Fixierung des Ventilknopfes 1 in der jeweiligen Funktionsstellung zu gewährleisten, sind Verrastungselemente 7 vorgesehen, die in Form einer kugelartigen Erhebung 8 des Ventilknopfes 2 und einer hierzu passenden Einbuchtung 9 des Deckels 1 ausgebildet sind. Bei einem Verdrehen des Ventilknopfes erfolgt ein Anheben desselben durch die Erhebung 8, sodaß die Dichtungen 10 - 12 beim Drehen des Ventilknopfes 2 entlastet und somit vor einer Beschädigung geschützt werden.

Die Erfindung ist nicht auf das gezeigte Ausführungsbeispiel beschränkt, vielmehr ergeben sich für den Fachmann im Rahmen des Schutzbereichs der Ansprüche vielfältige Abwandlungs- und Modifikationsmöglichkeiten.

## Patentansprüche

1. Deckel für ein Kochgeschirr, mit einer Ausnehmung (3) im Deckel (1) und einem Ventilknopf (2), **dadurch gekennzeichnet,** daß der Ventilknopf (2) drehbar am Deckel (1) gelagert und mit einer Ausblasöffnung (4) und einer Pfeiföffnung (6) versehen ist, welche durch Drehen des Ventilknopfs (2) jeweils mit der Ausnehmung (3) im Deckel (1) in fluchtende Verbindung bringbar sind, wobei der Ventilknopf (2) an einem zentrischen, am Deckel (1) befestigten Lagerelement (13, 14, 15) gelagert und mittels eines Vorspannelementes (5) gegen den Deckel (1) vorgespannt ist, wobei das Lagerelement (13, 14, 15) einen am Deckel (1) befestigten Gewindebolzen (13), eine mit dem Gewindebolzen (13) verschraubte Zylinderhülse (14) und eine mit der Hülse (14) verbundene Halteplatte (15) umfaßt, wobei sich das Vorspannelement (5) an der Halteplatte (15) abstützt.

2. Deckel nach Anspruch 1, dadurch gekennzeichnet, daß der Ventilknopf (2) und der Deckel (1) jeweils mit den Ventilknopf (2) in einer Ausblasstellung, einer Pfeifstellung oder einer Verschließstellung fixierenden, lösbaren Verrastungselementen (7) versehen sind.

3. Deckel nach Anspruch 2, dadurch gekennzeichnet, daß die Verrastungselemente (7) in Form einer dem Deckel (1) zugewandten Erhebung (8) der Unterseite des Ventilknopfes (2) und einer hierzu passenden Einbuchtung (9) des Deckels (1) ausgebildet sind.

4. Deckel nach einem der Ansprüche 1 bis 3, dadurch gekennzeichnet, daß der Ventilknopf (2) im Bereich der Ausblasöffnung (4), der Pfeiföffnung (6) und dem Verschlußbereich mit einer Dichtung (10 - 12) versehen ist.

5. Deckel nach einem der Ansprüche 1 bis 4, dadurch gekennzeichnet, daß die Halteplatte (15) zumindest eine dem Ventilknopf (2) zugewandte Rastklinke (16) aufweist und daß der Ventilknopf (2) mit zumindest einer beim Anheben des Ventilknopfes (2) mit der Rastklinke (16) in Eingriff bringbaren Rastausnehmung (17) versehen ist.

6. Deckel nach Anspruch 5, dadurch gekennzeichnet, daß die Rastausnehmung (17) und die Rastklinke (16) einen Abstand aufweisen, welcher ein gegenseitiges Eingreifen beim Anheben des Ventilknopfes (2) zum Lösen des Verrastungselementes (7) verhindert.

## Claims

1. A lid for cooking vessels, having both an opening (3) in the lid (1) and a valve knob (2), characterised in that the valve knob (2) is rotatably mounted on the lid (1) and is provided with an exhaust opening (4) and a whistling opening (6) which can in each case be brought into an aligned connection with the opening (3) in the lid (1) through rotation of the valve knob (2), wherein the valve knob (2) is mounted on a centrical bearing element (13, 14, 15) secured to the lid (1) and is biased against the lid (1) by means of a biasing element (5), wherein the bearing element (13, 14, 15) comprises a threaded bolt (13) secured to the lid (1), a cylindrical sleeve (14) screwed to the threaded bolt (13) and a holding plate (15) connected to the sleeve (14), wherein the biasing element (5) is supported against the holding plate (15).

2. A lid in accordance with Claim 1, characterised in that the valve knob (2) and the lid (1) are in each case provided with releasable locking elements (7) fixing the valve knob (2) in an exhaust position, a whistling position or a closing position.

3. A lid in accordance with Claim 2, characterised in that the locking elements (7) are in the form of a projection (8) - which faces the lid (1) and is located at the underside of the valve knob (2) - and a corresponding depression (9) in the lid (1).

4. A lid in accordance with any one of Claims 1 to 3, characterised in that the valve knob (2) is provided with a seal (10 - 12) in the region of the exhaust opening (4), the whistling opening (6) and in the closing region.

5. A lid in accordance with any one of Claims 1 to 4, characterised in that the holding plate (15) has at least one locking catch (16) facing the valve knob (2), and in that the valve knob (2) is provided with at least one locking recess (17) which can be brought into engagement with the locking catch (16) when the valve knob (2) is raised.

6. A lid in accordance with Claim 5, characterised in that the locking recess (17) and the locking catch (16) are at a distance from one another which prevents engagement with one another when the valve knob (2) is raised in order to release the locking element (7).

## Revendications

1. Couvercle pour un ustensile de cuisson, comportant un évidement (3) dans un couvercle (1) et un bouton formant soupape (2), caractérisé en ce que le bouton formant soupape (2) est monté tournant sur le couvercle (1) et est prévu avec une ouverture pour l'échappement d'air (4) et une ouverture formant sifflet (6), qui peuvent être chacune mises en alignement avec l'évidement (3) dans le couvercle (1), en faisant tourner le bouton formant soupape (2), ce dernier étant monté sur un organe de maintien central (13, 14, 15) fixé sur le couvercle (1), et étant appuyé, avec une précontrainte, contre le couvercle (1), au moyen d'un organe (5) de précontrainte, l'organe de maintien (13, 14, 15) étant constitué d'une tige filetée (13) fixée sur le couvercle (1), d'une douille cylindrique (14) vissée sur le tourillon fileté (13) et d'une plaque d'arrêt (15) reliée à la douille (14), l'organe de précontrainte (5) s'appuyant sur la plaque de fixation (15).

2. Couvercle suivant la revendication 1, caractérisé en ce que le bouton formant soupape (2) et le couvercle (1) sont chacun munis d'organes de verrouillage (7) libérables, immobilisant, chaque fois, le bouton formant soupape (2), soit dans une position d'échappement des gaz, soit dans une position de sifflement, soit dans une position de fermeture.

3. Couvercle suivant la revendication 2, caractérisé en ce que les organes de verrouillage (7) sont réalisés sous la forme d'un bossage (8) de la face inférieure du bouton formant soupape (2), tournée vers le couvercle (1), et d'un enfoncement (9) du couvercle (1), s'ajustant sur le bossage (8).

4. Couvercle suivant l'une des revendications 1 à 3, caractérisé en ce que le bouton formant soupape (2) est muni d'une étanchéité (10 -12), dans la zone de l'ouverture d'échappement des gaz (4), dans la zone de l'ouverture formant sifflet (6) et dans la zone de fermeture.

5. Couvercle suivant l'une des revendications 1 à 4, caractérisé en ce que la plaque d'arrêt (15) présente au moins un cliquet de blocage (16) tourné vers le bouton formant soupape (2), et en ce que le bouton formant soupape (2) est muni d'au moins un évidement de blocage (17) pouvant venir en engagement avec le cliquet de blocage (16) si on soulève le bouton formant soupape (2).

6. Couvercle suivant la revendication 5, caractérisé en ce que l'évidement de blocage (17) et le cliquet de blocage (16) présentent un écartement empêchant leur engagement réciproque lorsqu'on soulève le bouton formant soupape (2) pour libérer l'organe de verrouillage (7).
